# EUROPEAN PATENT APPLICATION

(11) **EP 3 456 518 A1**
(43) Date of publication of application: **20.03.2019**
(21) Application number: 18190816.1
(22) Date of filing: 24.08.2018
(51) Int. Cl.: B29C 64/379, B29C 64/264

(54) **APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Braunroth, Domenik, 96465 Neustadt bei Coburg (DE)
(74) Representative: Hafner & Kohl

(57) **Abstract**

Apparatus (1) for additively manufacturing three-dimensional objects (2) by means of successive layerwise selective irradiation and consolidation of layers of a build material (3) which can be consolidated by means of an energy source, comprising an application unit that is adapted to successively apply layers of build material (3) on a build plate (8) or previously applied layers of build material (3), wherein a lifting device (16) is provided that is connected or connectable to the build plate (8), wherein the lifting device (16) is adapted to lift the build plate (8), in particular after the additive manufacturing process is finished.

## Description

The invention relates to an apparatus for additively manufacturing three-dimensional objects by means of successive layerwise selective irradiation and consolidation of layers of a build material which can be consolidated by means of an energy source, comprising an application unit that is adapted to successively apply layers of build material on a build plate or previously applied layers of build material.

Apparatuses for additively manufacturing three-dimensional objects are generally known from prior art. Usually, an application unit is used to successively apply layers of build material, for example on a build plate, such as a height adjustable build plate/build table. As the build material is applied in layers and successively irradiated and thereby consolidated, successive layers are bonded in irradiation regions, as build material consolidates between the individual layers. Hence, the first layer of build material that is applied onto the build plate usually is bonded to the build plate and the three-dimensional object manufactured on the build plate has to be removed from the build plate after the additive manufacturing process is finished.

As additive manufacturing apparatuses steadily become larger, additively built objects tend to have larger dimensions/volumes, wherein the weight of the object and the non-consolidated build material often exceeds a value that can be easily handled manually by an operator. For example, regarding large build chambers, objects with a mass of more than 50 kg can be manufactured. After the additive manufacturing process is finished the non-consolidated build material has to be removed from the object and the object on the build plate has to be moved out of the process chamber. Dependent on the arrangement of the build material removal unit that is used for removing the non-consolidated build material, some regions are difficult to access. In particular, regarding regions that are covered by the (geometrical shadow of the) object, a removal of non-consolidated build material is difficult or even not possible. For example, hollow portions that are arranged at an opposite side of the object with respect to the position of the removal unit, such as a suction lance, cannot be cleaned properly or the non-consolidated build material cannot be removed from such portions.

It is an object of the present invention to provide an improved apparatus for additively manufacturing three-dimensional objects, wherein in particular the handling of the build plate after the additive manufacturing process is improved.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the inventive apparatus comprises a build plate on which the object is additively built, i.e. on which the layers of build material are successively applied and selectively consolidated dependent on the geometry of the object. After the additive manufacturing process is finished, the build material has to be removed and the build plate has to be moved from the apparatus. The invention is based on the idea that the apparatus comprises a lifting device that is connected or connectable to the build plate, wherein the lifting device is adapted to lift the build plate, in particular after the additive manufacturing process is finished. Thus, it is possible to use the inventive lifting device to lift the build plate inside the additive manufacturing apparatus. The lifting device may therefore, be connected with the build plate, for example via a corresponding connecting means. After the connection between the lifting device and the build plate is established, the lifting device may lift the build plate.

Hence, it is possible to lift the build plate and therefore, operators do not have to lift the build plate and the additively built object which is also connected with the build plate by themselves. In particular regarding additive manufacturing processes in which large three-dimensional objects with comparatively high masses are manufactured, the inventive lifting device significantly improves the handling of the build plate and the additively built object. Further, by lifting the build plate it is possible to gain access to regions of the object (via a build material removal unit) that were covered by the object in build orientation, i.e. the orientation of the object during the additive manufacturing process. By lifting the build plate, the object that is additively built on the build plate is also lifted and can be accessed better.

According to a preferred embodiment of the inventive apparatus, the lifting device may be adapted to lift the build plate for a defined lifting height into at least one lifted position. For example, after the additive manufacturing process is finished, the build plate is arranged in a first position, e.g. a build position. It is possible to remove non-consolidated build material, for example until the build plate becomes accessible, as the build material is removed. Hence, the lifting device may be connected to the build plate and the build plate may be lifted to a defined lifted position, for example for a defined lifting height. Dependent on the geometry of the process chamber, in particular the build chamber of the apparatus, the defined lifting height can be adjusted.

The lifting device may in particular be adapted to lift the build plate above a process plane of the apparatus in which the build plane is arranged. The term "build plane" refers to the plane in which the build material is arranged to be irradiated during the additive manufacturing process. The term "process plane" may refer to a plane that comprises the build plane and other planes, such as a dose plane and/or an overflow plane and the like. The process plane may refer to a bottom of the process chamber, for instance. By lifting the build plate above the process plane, the build plate is also lifted above the build plane.

The inventive apparatus may further be improved in that the lifting device is adapted to rotate the build plate in a lifted position, in particular above the process plane. Hence, after the lifting device lifted the build plate into the lifted position, for example for the defined lifting height, the lifting device may rotate the build plate, for example for 45°, 90° or 180°. Of course any other arbitrary rotation angle is possible, e.g. more than 360°. By rotating the build plate, other sides of the additively built object become accessible to, inter alia, a build material removal unit, such as a suction lance. Thus, the removal of non-consolidated build material can be significantly improved by rotating the build plate to access regions of the additively built object that were previously not accessible in the position in which the object was arranged during the additive manufacturing process (build position) and after the additive manufacturing process is finished. The rotation of the build plate in the lifted position may be performed with respect to a machine axis of the additive manufacturing apparatus. In particular, the build plate may be rotated about an axis which is perpendicular to the build plane or the process plane, respectively.

Hence, the lifting device may be adapted to rotate the build plate for a defined rotation angle, preferably at least 90°, in particular more than 180°, with respect to a build orientation in which the build plate is mounted during the additive manufacturing process (build position). Of course, the lifting device may be adapted to rotate the build plate in different directions, e.g. rotate the build plate by -90° instead of 270°. Thus, the build orientation defines the position in which the build plate is mounted during the additive manufacturing process and after the additive manufacturing process is finished (before it is rotated via the lifting device).

After the lifting device lifted the build plate to the defined lifted position, the build plate may be rotated for the defined rotation angle. For example, the build plate may be rotated for 180° ensuring that regions become accessible which were previously arranged on the opposite side with respect to the position of the build material removal unit. For example, if a build material removal unit for removing non-consolidated build material is arranged on a first side of the process chamber, non-consolidated build material can be removed on that side of the object facing the first side. The opposite side may lie in the (geometrical) shadow of the object and can therefore, not directly be accessed via the build material removal unit. By turning the build plate for the defined rotation angle, e.g. 180°, the regions of the three-dimensional object that are arranged on the opposite side (opposite to the first side) can be cleaned via the build material removal unit directly. Hence, the removal of non-consolidated build material can significantly be improved.

The inventive lifting device may preferably be arranged inside the process chamber of the inventive apparatus. Thus, it is not necessary to open the process chamber of the apparatus and insert a lifting device, but it is possible that the lifting device is already arranged inside the process chamber of the apparatus. Thus, for removing build material from the process chamber after the additive manufacturing process is finished, the (inert) atmosphere inside the process chamber does not have to be corrupted. Instead, the build material may be removed more thoroughly/completely from the object before the object is exposed to the environment. Therefore, a reaction of the build material with the environment outside the process chamber can be reduced or even avoided. In particular, it is possible to only remove the build plate and the object from the process chamber when the build material has been removed as completely as possible.

For example, it is possible that the lifting device may be movable from a park position in which the lifting device is arranged during the additive manufacturing process to a lifting position in which the lifting device may be arranged for lifting the build plate. Thus, the lifting device may be stowed or parked in a park position during the additive manufacturing process, in which park position the lifting device may be out of the way of other functional components of the apparatus, such as the irradiation device, the application unit and the like. After the additive manufacturing process is finished and the functional components of the apparatus are not used, the lifting device may be moved from the park position to the lifting position, wherein the lifting device may lift the build plate in the lifting position. Of course, it is possible to move the lifting device back into the park position before the next additive manufacturing process is started.

The inventive apparatus may further be improved in that the lifting device may comprise at least one lifting element with at least one connecting means via which the lifting element can be separably connected or is separably connected to the build plate. For example, the build plate may comprise corresponding receiving means via which the build plate may be connected to the lifting element. Hence, it is possible to remove non-consolidated build material in order to gain access to the receiving means and to connect the connecting means of the lifting element to the build plate. The lifting element or the multiple lifting elements may be built as frame-like structure. The lifting element may provide a loop or a grommet for interaction with a hook-like element used to lift the lifting element. Hence, the hook-like element may be lifted and interact with the loop or grommet to lift the lifting element and the build plate that is connected to the lifting element via the connection means/receiving means. The hook-like element may be connected to a pull element, such as a wire or a cable or a chain which can be wound up or unwound to lift / lower the lifting element and the build plate.

The lifting device may further comprise a vibration unit adapted to generate vibrations and transfer vibrations to the build plate. By transferring vibrations to the build plate and the object, the removal of powder can significantly be improved. Hence, the vibration unit of the lifting device may be arranged, inter alia, in advance to the hook-like element or the pull element or the lifting device itself may be mounted to the apparatus via the vibration unit. The vibration unit may comprise an actuator, e.g. a motor, and a spring element, wherein the motor may move the hook-like element or the pull element or the lifting device, wherein the spring element may generate a restoring force. Thus, it is possible that due to the vibrations the build plate is moved, e.g. in the magnitude of 0.1 mm, leading to an improved build material removal process.

The at least one connection means may, for example, be adapted to establish a force-locking and/or a positive-locking connection between the lifting element and build plate. Hence, the connection means may be built as screw and can be screwed into a corresponding receiving means in the build plate. It is also possible that the build plate comprises receiving means for establishing a positive locking connection, for example a groove in which a tongue-like connection means can be inserted/with which the tongue-like connection means can be connected.

The lifting element may be stowed in a tool receiving unit, in particular arranged in a wall region of the process chamber. Hence, in particular with the lifting device in park position, the lifting element may be stowed in a tool receiving unit. For example, the tool receiving unit may be arranged in the wall region, in particular at the rear wall of the process chamber, for example opposite to the side of the process chamber comprising a window and/or means for interaction with the process chamber, such as gloves of a glovebox. Of course, various other tools may be received in the tool receiving unit, such as a coater blade of an application unit and the like.

The lifting device may further be adapted to move, in particular slew, the lifted build plate out of the process chamber. Hence, it is not only possible to lift the build plate from the build position and to rotate the build plate relative to the build orientation, but it is also possible to move the lifted build plate out of the process chamber. For example, it is possible to slew the at least one lifting element that is connected with the build plate out of the process chamber and place the build plate together with the object onto a receiving unit, for example a table or a transport unit or a mobile handling station. Afterwards, the build plate may be released or disconnected from the lifting element of the lifting device.

The lifting device may preferably be built as or comprise a slewing crane or a gantry crane or a rail bound crane. Thus, the specific construction or geometry of the crane can be chosen arbitrarily and dependent on the application, e.g. the design of the process chamber of the additive manufacturing apparatus. It is possible that the lifting device is built as slewing crane which is adapted to slew about an axis and move the lifted build plate out of the process chamber. It is also possible that the crane is built as a gantry crane. The crane may also be movable on rails provided in the process chamber of the apparatus. Hence, the lifted build plate may also be moved linearly out of the process chamber, e.g. by moving along rails. Of course, a combination of a linearly moving and slewing crane can be used, e.g. a lifting device that is adapted to linearly move the lifted build plate e.g. in x- and y- direction over the process plane and further adapted to slew the build plate out of the process chamber. Self-evidently any other arbitrary combination is also possible.

Additionally, the apparatus may comprise a build material removal unit which is adapted to remove build material, in particular via the generation of a gas stream, wherein the lifting device is adapted to lift and/or rotate the build plate between at least two removal positions. Hence, the apparatus may comprise a build material removal unit, for example a suction unit, e.g. comprising a suction lance. The build material removal unit is therefore, adapted to remove non-consolidated build material after the additive manufacturing process is finished.

To remove the non-consolidated build material of the object, the build material removal unit is adapted to generate a gas stream, for example a stream of an inert gas, e.g. argon, that is sucked through an opening of the build material removal unit, such as a nozzle or an orifice, preferably arranged on a build material removal element, such as a suction lance. To improve the build material removal process, the lifting device is adapted to lift the build plate and rotate the build plate between at least two removal positions. For example, the build plate is rotated from one removal position to the other removal position about an axis perpendicular to the build plate (and particular to the process plane) for a defined rotational angle, e.g. 90° or 180°. Hence, the three-dimensional object may be positioned in different removal positions in that the build material removal unit may remove build material from different sides of the object or under different angles relative to the object, respectively.

According to another embodiment of the inventive apparatus, a gas-tight enclosure can be connected or connectable with the lifting device, in particular the at least one lifting element forms a gas-tight enclosure in a connected state, in which the lifting element is connected to the build plate. Hence, a gas-tight, e.g. air-tight, enclosure can be formed around the object, preferably providing a closed volume with the object inside. After the additive manufacturing process is finished, non-consolidated build material can be removed from the build plate / object and the object can be enclosed. Afterwards, the object can be removed in the gas-tight enclosure still under the process atmosphere, e.g. the inert process gas. Thus, a contact of the object with the atmosphere can be avoided e.g. for transporting the object or providing the object to a post-processing unit. Of course, the enclosure can have suitable means to be coupled with the coupling means, as described before.

It is also possible to build the enclosure, e.g. the lifting element, enclosing the object together with the non-consolidated build material in the additive manufacturing process. Hence, the enclosure can be built in the additive manufacturing process, enclosing the build material and the additively built object inside the enclosure. Further, an opening such as a seal or a valve may be integrated in the enclosure to remove the build material after the process is finished. Of course, an adequate means for coupling the enclosure with the coupling unit, i.e. with the lifting device, can also be manufactured together with the enclosure in the additive manufacturing process, as described before.

Besides, the invention relates to a post-processing apparatus for an apparatus for additively manufacturing three-dimensional objects, comprising a lifting device connected or connectable to a build plate on which the three-dimensional object is built, wherein the lifting device is adapted to lift the build plate, in particular over a process plane. The post-processing apparatus may, for example, be built as build material removal apparatus, such as a glovebox into which a build module of an additive manufacturing apparatus can be moved. The build module of the additive manufacturing apparatus may, for example, comprise a build chamber in which a build plate and the object surrounded by the non-consolidated build material are comprised. Hence, the build module may be inserted into the post-processing apparatus, wherein build material can be removed from the build plate/the object. Additionally, the lifting device may be connected to the build plate and the build plate may be lifted and/or rotated to enhance the removal process, as described before. Thus, the post-processing apparatus also comprises a "process chamber" in the scope of this application, in which a lifting device may be arranged.

The invention also relates to a method for transporting a build plate of an additively manufacturing apparatus, in particular using an inventive apparatus, as described before, comprising the steps:
- connecting a lifting device to the build plate on which the three-dimensional object is built
- lifting build plate from a build position
- moving the build plate out of the process chamber.

Further, the invention relates to a method for removing, in particular powdery, build material from an additively manufactured object, in particular manufactured by means of successive layerwise selective irradiation and consolidation of layers of a build material which can be consolidated by means of an energy source, comprising the steps:
- connecting a lifting device to the build plate on which the three-dimensional object is built
- lifting and/or rotating the build plate to at least one removal position
- removing build material, in particular via a gas stream, in the at least one removal position.

Optionally, the build plate may be rotated to multiple removal positions, in particular to at least two removal positions, wherein build material is removed from the object and/or the build plate in the at least two removal positions. Afterwards, it is possible to move the build plate out of the process chamber via the lifting device, in particular via slewing the build plate out of the process chamber.

Self-evidently, all features, details and advantages described with respect to the inventive apparatus, the inventive post-processing apparatus, the inventive method for transporting a build plate and the inventive method for removing build material from an additively manufactured object can be arbitrarily combined and transferred. In particular, the inventive method may be performed on the inventive apparatus or the inventive post-processing apparatus, respectively.

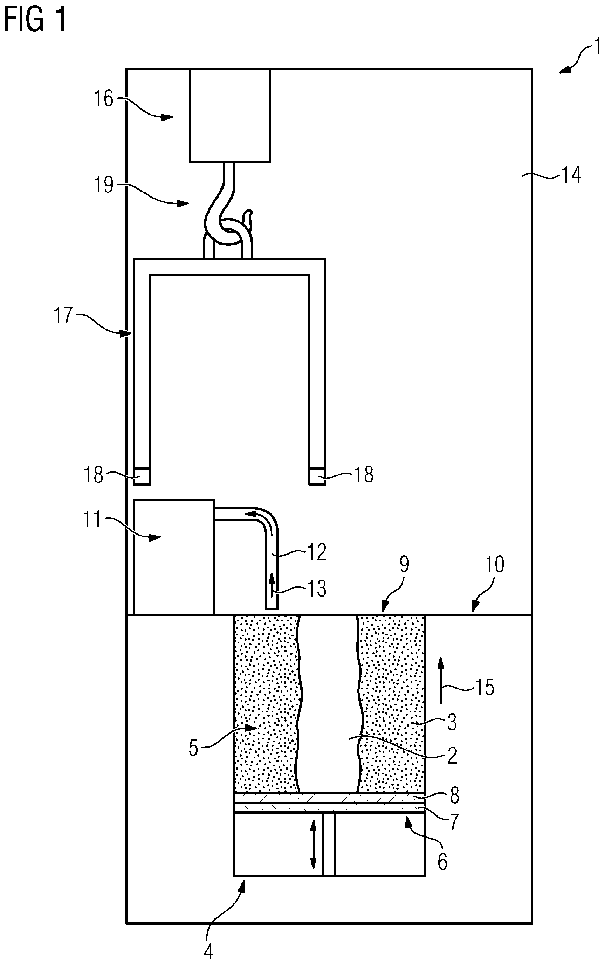

Exemplary embodiments of the invention are described with reference to the Fig. The Fig. are schematic diagrams, wherein
Fig. 1 - 4 show an inventive apparatus in side view.

Fig. 1 shows an apparatus 1 for additively manufacturing three-dimensional objects 2 by means of successive layerwise selective irradiation and consolidation of layers of a build material 3 which can be consolidated by means of an energy source (not shown). Alternatively, the apparatus 1 may also be understood as post-processing apparatus in which the build module 4 can be moved after an additive manufacturing process is finished in an additive manufacturing apparatus. In other words, all features, details and advantages are fully transferable from the apparatus 1 described hereinafter to a post-processing apparatus, such as a handling station / glovebox.

The build module 4 comprises a build chamber 5 in which a carrier unit 6 comprising a carrier plate 7 and a build plate 8 is arranged. The carrier plate 7 is connected with the build plate 8, e.g. via screws, wherein the build plate 8 carries the additively built object 2 and the non-consolidated build material 3 surrounding the object 2. In the situation depicted in Fig. 1, the build module 4 is arranged in that the upper surface of the object 2 and the uppermost layer of build material 3 are arranged in the build plane 9 of the additive manufacturing apparatus 1. The build plane 9 is comprised in a process plane 10 which, for example, may also comprise a dose plane and an overflow plane (not shown). The process plane 10 may be understood as the bottom of a process chamber 14, i.e. the chamber in which the additive manufacturing process is performed. In other words, the situation depicted in Fig. 1 shows the build module 4 as it is arranged in the apparatus 1 after an additive manufacturing process is finished.

To remove the non-consolidated build material 3 surrounding the object 2, a build material removal unit 11 is provided with a build material removal element 12, such as a (flexible) suction lance. The build material removal unit 11 is adapted to generate a gas stream 13 to suck build material 3 out of the process chamber 14. Of course, any arbitrary other mode of removing the build material 3 from the object 2 is feasible. In order to remove the non-consolidated build material 3, the carrier unit 6 can be moved upwards (as indicated via arrow 15) continuously or stepwise moving the non-consolidated build material 3 and the object 2 into the process chamber 14. Preferably, the build material removal unit 11 is used to remove the non-consolidated build material 3 while the carrier unit 6 is moved upwards.

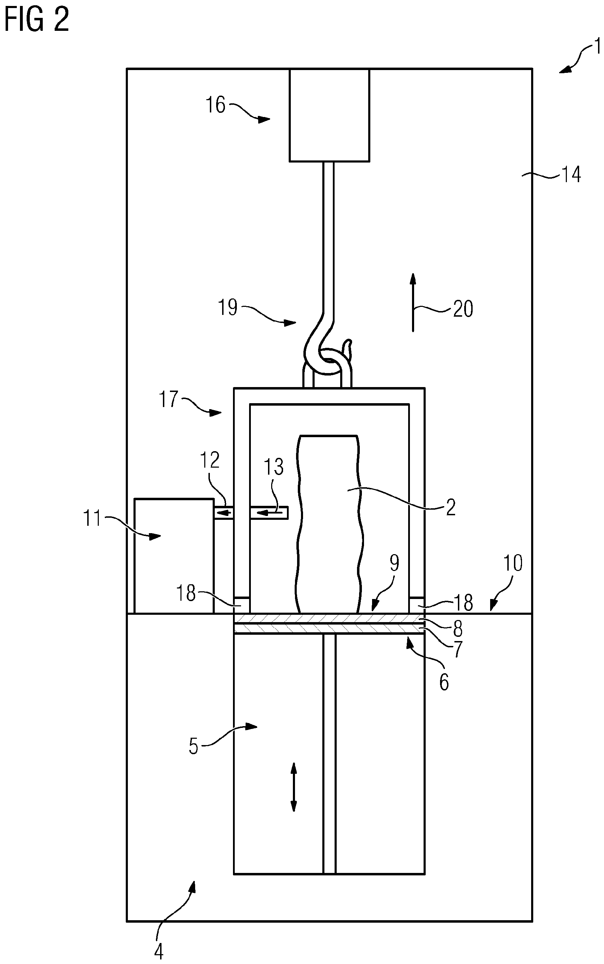

As can further be derived from Fig. 1, the apparatus 1 comprises a lifting device 16 which is arranged in a park position in the situation that is depicted in Fig. 1. The lifting device 16 comprises a lifting element 17 which in this exemplary embodiment comprises a frame-like structure with connecting means that can be connected with the build plate 8, as will be described below. The lifting device 16 further comprises a coupling unit 19, for example a hook-like element, which is adapted to interact with the lifting element 17. The lifting device 16 further comprises an actuator, such as a motor (not shown), for pulling the coupling unit 19 and the lifting element 17 upwards and moving the lifting device 16 through the process chamber 14 (Fig. 2 - 4). The lifting device 16 can be moved inside the process chamber 14, in particular from the park position that is depicted in Fig. 1 to a lifting position, as depicted in Fig. 2.

Fig. 2 shows the apparatus 1 from Fig. 1 in a situation in which the carrier unit 6 has been moved upwards to a position in which the top surface of the build plate 8 is arranged in the build plane 9 or slightly below the build plane 9. In other words, the situation, as depicted in Fig. 2, can be understood as the top position of the carrier plate 7 of the carrier unit 6. Further, Fig. 2 shows that the lifting element 17 is attached to the build plate 8 and that most of the non-consolidated build material 3 has already been removed via the build material removal unit 11. Although, a defined part of the non-consolidated build material 3 has already been removed via the build material removal unit 11, the object 2 may comprise portions, such as hollow portions or recesses/incisions/cutbacks in which non-consolidated build material 3 can still be received / attached to the object 2.

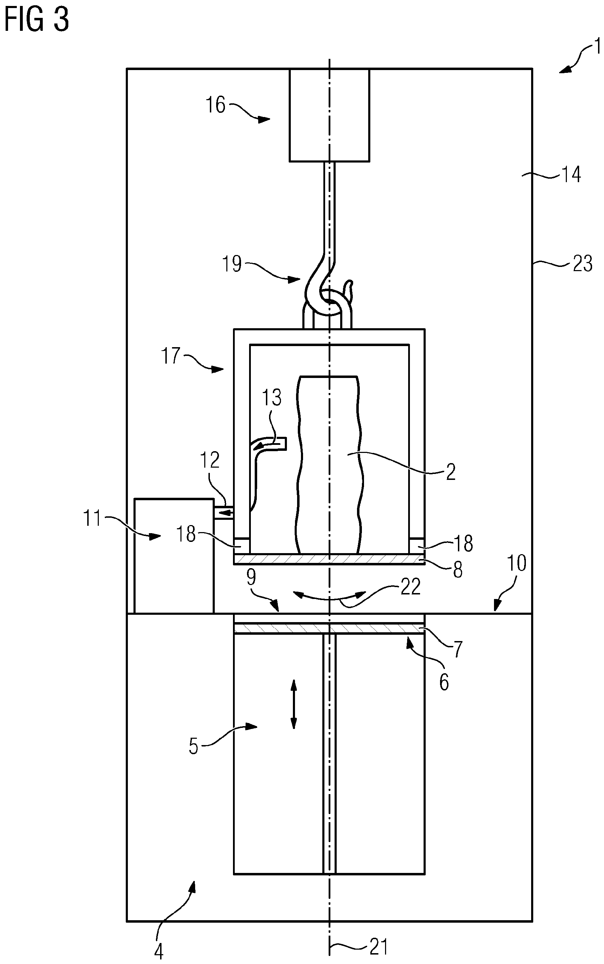

After the build plate 8 has been removed from the carrier plate 7, the lifting device 16 is adapted to lift the build plate 8 (as indicated via arrow 20). Hence, the lifting device 16 may lift the build plate 8 from a build position, as depicted in Fig. 2, to a lifted position, as depicted in Fig. 3. Fig. 3 further shows that the build plate 8 can be rotated via the lifting device 16, for example about an axis 21 (as indicated via arrow 22). Thus, it is possible to rotate the build plate 8 and the object 2 for a defined rotation angle, e.g. 90° or 180°, to at least two removal positions in which the build material removal unit 11 can be used to remove build material 3 from the object 2 from different angles of the object 2.

For example, it is possible to rotate the build plate 8 and the object 2 about 90°, 180° and any other arbitrary rotation angle. Advantageously, it is possible to remove build material 3 from different sides of the object 2, for example from a side of the object 2 that faces a side 23 of the apparatus 1, i.e. the side of the object 2 that faces away from the build material removal unit 11 in build position (Fig. 1, 2). Hence, it is possible to remove build material 3 from a side of the object 2 that is usually not accessible to the build material removal unit 11. Thus, hollow portions, recesses, cutbacks or incisions can be made accessible to the build material removal unit 11 by rotating the object 2 towards the build material removal element 12, for instance.

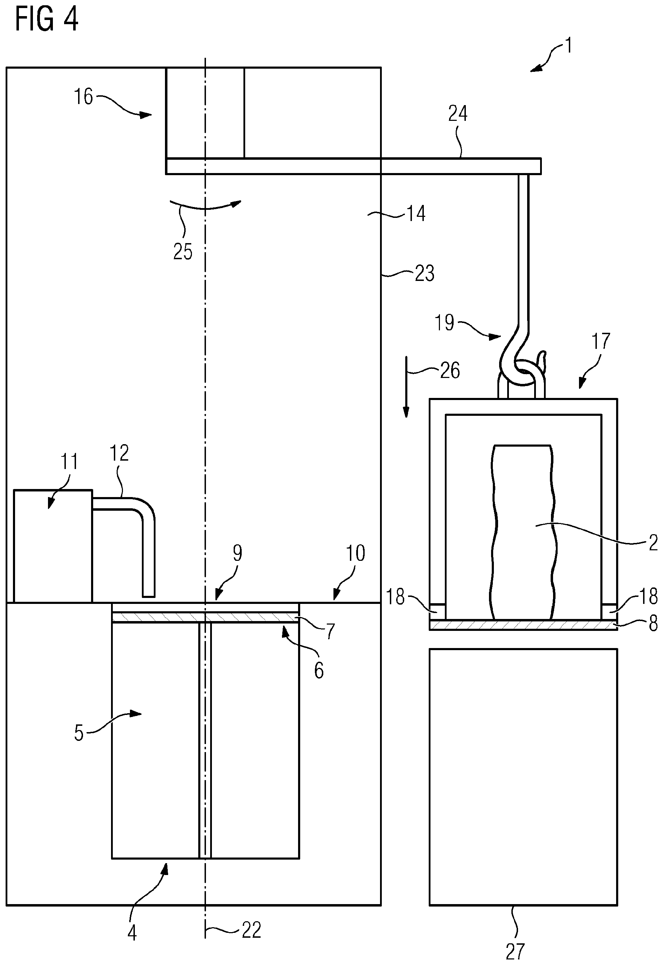

Fig. 4 shows that the lifting device 16 is further adapted to move the build plate 8 and the object 2 out of the process chamber 14, for example via a door or window arranged on the side 23 of the apparatus 1. Hence, the door or window can be opened and the lifting device 16 can move the object 2 and the build plate 8 which is still connected to the lifting element 17 out of the process chamber 14. For example, the lifting device 16 may slew the build plate 8 and the object 2 out of the process chamber 14 by rotating an arm 24 about the axis 22 (as indicated via arrow 25). After the object 2 and the build plate 8 have been rotated out of the process chamber 14, the lifting device 16 may lower the build plate 8 and the object 2 (as indicated via arrow 26), in particular put the build plate 8 and the object 2 onto a receiving unit 27, such as a table or a transport unit. Advantageously, it is not necessary that an operator has to lift the build plate 8 and the object 2 himself. Further, the removal of (powdery) non-consolidated build material 3 is significantly improved, as the object 2 can be rotated and build material 3 can be removed from different sides (every side) of the object 2.

Of course, the lifting device 16 can be built as any other arbitrary lifting device, such as a gantry crane, a portal crane a rail based crane and the like. Further, the coupling unit 19 is optional and a static connection between the lifting device 16, for example a cable, and the lifting element 17 is also possible.

The lifting element 17 can also be understood as or used as a gas-tight enclosure connected with the build plate 8 and with the lifting device 16. In other words, the at least one lifting element 17 forms a gas-tight enclosure in the connected state, in which the lifting element is connected to the build plate 8. Hence, it is possible to remove non-consolidated build material 3 in the (inert) atmosphere inside the process chamber and connecting the lifting element 17 afterwards to enclose the object 2 gas-tight, for example for transporting or storing the object 2 in advance to a post-processing step.

Self-evidently, the inventive methods can be performed on the apparatus 1. As described before, the apparatus 1 can also be understood as post-processing apparatus, into which the build module 4 is inserted to have the build material 3 removed from the build chamber 5, in particular from the build plate 8 and the object 2.

## Claims

1. Apparatus (1) for additively manufacturing three-dimensional objects (2) by means of successive layerwise selective irradiation and consolidation of layers of a build material (3) which can be consolidated by means of an energy source, comprising an application unit that is adapted to successively apply layers of build material (3) on a build plate (8) or previously applied layers of build material (3), **characterized by** a lifting device (16) connected or connectable to the build plate (8), wherein the lifting device (16) is adapted to lift the build plate (8), in particular after the additive manufacturing process is finished.

2. Apparatus according to claim 1, **characterized in that** the lifting device (16) is adapted to lift the build plate (8) for a defined lifting height into at least one lifted position.

3. Apparatus according to claim 1 or 2, **characterized in that** the lifting device (16) is adapted to lift the build plate (8) above a process plane (10) of the apparatus (1) in which the build plane (9) is arranged.

4. Apparatus according to one of the proceeding claims, **characterized in that** the lifting device (16) is adapted to rotate the build plate (8) in a lifted position, in particular above the process plane (10).

5. Apparatus according to one of the proceeding claims, **characterized in that** the lifting device (16) is adapted to rotate the build plate (8) for a defined rotation angle, preferably at least 90°, in particular more than 180°, with respect to a build orientation in which the build plate (8) is mounted during the additive manufacturing process.

6. Apparatus according to one of the proceeding claims, **characterized in that** the lifting device (16) is arranged inside the process chamber (14) of the apparatus (1).

7. Apparatus according to one of the proceeding claims, **characterized in that** the lifting device (16) is moveable from a park position in which the lifting device (16) is arranged during the additive manufacturing process to a lifting position in which the lifting device (16) is arranged for lifting the build plate (8).

8. Apparatus according to one of the proceeding claims, **characterized in that** the lifting device (16) comprises at least one lifting element (17) with at least one connecting means (18) via which the lifting element (17) can be separably connected or is separably connected to the build plate (8).

9. Apparatus according to one of the proceeding claims, **characterized in that** the at least one connecting means (18) is adapted to establish a force-locking and/or a positive-locking connection between the lifting element (17) and the build plate (8).

10. Apparatus according to one of the proceeding claims, **characterized in that** the lifting element (17) is stowed in a tool receiving unit, in particular arranged in a wall region of the process chamber (14), during the additive manufacturing process.

11. Apparatus according to one of the proceeding claims, **characterized in that** the lifting device (16) is adapted to move, in particular slew, the lifted build plate (8) out of the process chamber (14).

12. Apparatus according to one of the proceeding claims, **characterized in that** the lifting device (16) is built as or comprises a slewing crane or a gantry crane or a rail bound crane.

13. Apparatus according to one of the proceeding claims, **characterized by** a build material removal unit (11) that is adapted to remove build material (3), in particular via the generation of a gas stream (13), wherein the lifting device (16) is adapted to lift and/or rotate the build plate (8) between at least two removal positions.

14. Apparatus according to one of the preceding claims, **characterized by** a gas-tight enclosure connected or connectable with the lifting device (16), in particular the at least one lifting element (17) forms a gas-tight enclosure in a connected state, in which the lifting element (17) is connected to the build plate (8).

15. Post-processing apparatus for an apparatus (1) for additively manufacturing three-dimensional objects (2), **characterized by** a lifting device (16) connected or connectable to a build plate (8) on which the three-dimensional object (2) is built, wherein the lifting device (16) is adapted to lift the build plate (8), in particular over a process plane (10).

16. Method for removing, in particular powdery, build material (3) from an additively manufactured object (2), in particular manufactured by means of successive layerwise selective irradiation and consolidation of layers of a build material (3) which can be consolidated by means of an energy source, **characterized by**
- connecting a lifting device (16) to the build plate (8) on which the three-dimensional object (2) is built
- lifting and/or rotating the build plate (8) to at least one removal position
- removing build material (3), in particular via a gas stream (13), in the at least one removal position.
